# EUROPEAN PATENT APPLICATION

(11) **EP 1 867 622 A1**
(43) Date of publication of application: **19.12.2007**
(21) Application number: 06115618.8
(22) Date of filing: 16.06.2006
(51) Int. Cl.: C05C 5/04, C05C 5/00, C05G 1/00

(54) **Orocess for the neutralization of propellant fuel oxidants and production of fertilizer therefrom**

(71) Applicant: Emek Makina Metal Sanayi, 34766 Istanbul (TR)
(72) Inventor: Özçelik Nejdet Emek Makina Metal Sanayi ve Ticaret, 34766, Istanbul (TR)
(74) Representative: Sevinç, Erkan

(57) **Abstract**

A process for producing an earth nitrate fertilizer composition as well as elimination of the environmental hazards of a liquid propellant fuel oxidant composition is disclosed. The process comprises the reaction of said fuel oxidant composition with an earth carbonate and water, wherein the oxidant composition consists of dinitrogen tetroxide (N₂O₄), nitric acid (HNO₃), and stabilizer agent(s) selected from the group consisting of hydrogen fluoride (HF), hydrogen iodide (HI) and sulfuric acid (H₂SO₄), whereby the neutralizations of nitric acid (HNO₃) and the stabilizer agent(s) are carried out by reacting the same with the earth carbonate, and nitric acid is produced in a reaction between dinitrogen tetroxide and water for later use in the neutralization reaction between nitric acid and the earth carbonate.

## Description

### Technical Field of the Invention

The present invention relates to a process for the production of fertilizer, namely a fertilizer composition consisting of calcium nitrate and calcium sulfate, by means of reacting a composition of propellant fuel oxidizing agents with calcium carbonate (limestone) in an aqueous medium. The invention hereby also provides the neutralization and reuse of such idle and hazardous materials eliminating the potential environmental risks and poisonous effects thereof.

### Background of the Invention / Prior Art

The present invention is directed to produce agricultural fertilizer compositions from the oxidizing agents used for the rocket propellant fuels, particularly for the liquid rocket fuels. The propellant fuels burn in the presence of certain oxidants in order to produce thrust in the rockets or ballistic missiles. Various oxidants have been used during the development of the conventional rockets and missiles in the past. However, the formerly used oxidants used untill the last decade are abandoned due to their major drawbacks with respect to the new alternatives and also the disadvantages in the sense of the environment.

The present invention is directed to produce fertilizer compositions by use of a particular type of oxidant composition consisting of dinitrogen tetroxide (N₂O₄), nitric acid (HNO₃), and stabilizer agent(s) selected from the group of hydrogen fluoride (HF), hydrogen iodide (HI) and sulfuric acid (H₂SO₄), which was formerly used as an oxidant composition for particularly the liquid propellant fuels of rockets and ballistic missiles. Said composition is difficult to store and handle due to extreme toxicity, corrosivity and explosive hazard, therefore, said oxidant compositions in bulk form are abandoned as idle waste material particularly in the Eastern Europe, further the same constitute potential hazardous risk for the environment. So far, neither a project for at least neutralizing the toxic effects of said materials, nor a feasible application for producing valuable products therefrom has been disclosed.

Conventional calcium nitrate Ca(NO₃)₂ fertilizers are basically prepared by the neutralization reaction of CaCO₃ and HNO₃ in an aqueous medium. This principal reaction is well known in the art for instance from GB 371279 and GB163330. Both these patents disclose the well known manner of the production of fertilizers containing calcium nitrate, starting from calcium carbonate and nitric acid.

Further, the production of the fertilizers (Ca(NO₃)₂ based) from the waste side products of various industries have been known and under active development. US 5 378 257 discloses a process for organic fertilizer production comprising mixing of nitric acid with a batch of waste matter and adding an amount of quicklime thereto. The waste material used in the process is garbage and sewage in general.

JP 10194736 discloses another process for the production of calcium nitrate based fertilizers from the industrial waste materials. A cast metal molding consisting of calcium carbonate is dipped into a nitric acid solution, wherein the neutralization reaction takes place between the core consisting of calcium carbonate and nitric acid after which the product having lime nitrate content is obtained.

Further the production of lime nitrate from the NOₓ type waste gasses is also well known for instance from US 5 846 286. This patent discloses a method for removing NOₓ from a gas stream while producing an alkaline earth nitrate fertilizer composition, wherein said NOₓ waste gasses are first converted to nitric acid and then treated with an alkaline earth compound such as calcium carbonate, calcium hydroxide or magnesium hydroxide in order to produce an alkaline earth nitrate fertilizer composition.

Neither of the documents cited above and the references available in the art define a solution for treating the above mentioned oxidizing agents formerly used for the missiles and rockets propellant systems, and even they do not propose a method for producing valuable products i.e. earth nitrate fertilizers from those idle materials. The present invention solves the problems mentioned in the objects of the invention in a manner explained in the detailed description and claims.

### Objects of the Invention

One of the objects of the present invention is to provide a process for completely neutralizing an oxidant composition consisting of dinitrogen tetroxide, nitric acid and stabilizer agent (HF, HI, and/or H₂SO₄), thereby eliminating the potential environmental hazards of said composition.

Another object of the present invention is to provide a process for producing a fertilizer composition comprising calcium nitrate and optionally calcium sulfate, with spontaneous neutralization reactions between the oxidant composition and calcium carbonate, wherein at least part of the nitric acid used in said reaction is supplied by the reaction itself.

A further object of the present invention is to provide a process for producing a fertilizer composition from an oxidant composition, wherein substantially all the components of said oxidant composition are neutralized and converted to the corresponding materials which have no risk with respect to the environment.

Still a further object of the present invention is to provide a process wherein the neutralization reactions of nitric acid and the components of the oxidizing agent are simultaneously carried out with a single reactant (earth carbonate) in an aqueous medium without the need for carrying out said reactions in separate steps.

### Summary of the Invention

Objects of the invention are achieved by the reaction of an oxidant composition consisting of dinitrogen tetroxide, nitric acid and stabilizer agent (HF, HI, and/or H₂SO₄), with an earth carbonate in an aqueous medium. The neutralization reaction is self enhanced due to the fact that the reaction sequences include the generation of nitric acid, which is later on used in the primary reaction for producing an earth nitrate. Furthermore, an amount of earth sulfate may be obtained in the product, which is desirable for the fertilizer compositions. The hazardous and toxic content of the oxidant composition is substantially neutralized and a valuable product i.e. a fertilizer composition is obtained. Side products of the neutralization reaction are not harmful and hazardous as they are removed in neutral form from the process effluent. Out coming gaseous waste products may readily be eliminated by conventional techniques, such as gas scrubbers. Thereby, an efficient process providing decrease in the reactant costs and elimination of the environmental risks of the above mentioned oxidant composition is obtained.

### Detailed Description of the Invention

The oxidant composition consisting of dinitrogen tetroxide (N₂O₄), nitric acid (HNO₃), and stabilizer agent (HF, HI and/or H₂SO₄), have been actively used for the fuels of rocket and missile propellant systems, and are no more in use for this purpose as per mentioned above. Said oxidant compositions, hereinafter referred as "melange", are now beyond their shelf life and serve potential environmental risks due to their extreme toxicity. The melange used in the present invention typically comprises 10-15 % N₂O₄, 80-90 % HNO₃, and 0.3-1.2 % stabilizer agent (HF and/or HI and/or H₂SO₄). The HF is particularly a toxic and extremely corrosive agent trashing the environment. It is also quite harmful and irritant for health making it difficult to handle. The oxidant melange composition defined above is therefore abandoned as an idle material in bulk form.

According to the present invention, melange can be converted into a suitable fertilizer composition which can well be used for various agricultural fields without having any disadvantage compared to the earth nitrate based fertilizer compositions available in the art. In the following description, calcium carbonate refers to the reactant fed to the reactor; however, one skilled in the art may readily appreciate that said reactant may be a carbonate of any earth metal. Similarly, the fertilizer illustrated as calcium nitrate may be a nitrate of any earth metal convenient for use in plant nutrition.

The principle well known reaction for producing calcium nitrate is simply shown below:

2HNO₃ + CaCO₃ → Ca(NO₃)₂ + CO₂ + H₂O (I)

The melange composition given above contains approximately 80-90 % of HNO₃, which is relatively higher than the other components. Calcium carbonate, as an outsourcing reactant is fed to the reactor in which one of the neutralization reactions takes place between calcium carbonate and nitric acid. High HNO₃ content of the melange composition makes it feasible to produce nitrous fertilizers from said composition. Therefore, one of the inventive features of the present invention appears hereby by using simply a necessary amount of limestone for converting this idle melange composition into a useful agricultural composition with reasonable efficiency.

N₂O₄, another component of the melange composition is reacted with water according to the reaction explicitly shown below:

N₂O₄ + H₂O → HNO₃ + HNO₂ (II)

Water is fed to the system with calcium carbonate as another outsourcing reactant. The reactions takes place simultaneously with the other neutralization reactions and generate nitric acid which later on turns into a reactant for reaction (I). It is therefore clearly seen that the concentration of nitric acid in the reaction vessel is kept substantially high due to the simultaneous nitric acid generation of reaction (II). One skilled in the art would readily appreciate that higher reactant concentration increases the reaction rate and enhances the reaction mechanism through the products on the right hand side. To this end, a second inventive feature of the present invention appears hereby in that the reaction (I) is self enhanced since the melange composition supplies the necessary nitric acid itself without the need for an external nitric acid feed. In a preferred embodiment of the present invention, only the feeds of calcium carbonate and water to the reaction vessel are sufficient for effectively running the process, thus overall reactant and equipment costs are reduced and complicated operation parameters are avoided. Furthermore, one skilled in the art may also appreciate that the process of the invention is much more cost effective as compared with the processes in the art (processes for the production of fertilizer from waste materials) due to the fact that unit prices of nitric acid is relatively higher than the calcium carbonate. In other words, the process disclosed hereby is not only cost effective compared to the conventional processes, it is also much more cost effective over the processes in which waste materials are converted to nitrous fertilizer compositions, because of the fact that the process of the invention does not require additional nitric acid feed for increasing the concentration of the same inside the reactor.

The stabilizer agents (HF, HI and/or H₂SO₄) in the melange composition should be removed as they are extremely toxic and hazardous for the environment. HF and HI are neutralized by the reaction given below:

2HF + CaCO₃→ CaF₂ + H₂O + CO₂ (or analogous HI reaction) (III)

Both calcium fluoride and calcium iodide are insoluble in the reaction liquor and may safely be removed from the reaction medium. The reaction (III) shown above simultaneously occurs with the other reactions (I), (II) and (IV) in the same medium, thus the need for additional treatment steps for removing/neutralizing such hazardous materials is completely eliminated. Therefore, a third inventive feature of the present invention appears hereby in that the removal of hazardous materials i.e. HI and/or HF, is carried out simply and spontaneously without any further effort or operation.

H₂SO₄ is another stabilizer agent which is potentially available in the melange composition as mentioned above. This strong acid is also a hazardous material for the environment and is neutralized according to the following explicit equation:

H₂SO₄ + CaCO₃ → CaSO₄ **+** H₂O **+** CO₂ (IV)

It is clearly seen that the sulfuric acid is also reacting with the common reactant calcium carbonate simultaneously with the reactions (I), (II) and (III). Calcium sulfate appears as a resulting product of the neutralization reaction (IV). It is also a desired component of the conventional nitrous fertilizer compositions since it considerably contributes the plant nutrition together with calcium nitrate. Therefore, a fourth inventive feature of the present invention appears in that the reaction (IV) provides the neutralization of sulfuric acid as well as the production of the desired component calcium sulfate at the same time. This reaction (IV) also does not require any further equipment, reactant and/or operation to be carried out, since the common reactant calcium carbonate is sufficient to conduct this reaction in a simultaneous and spontaneous manner as in the previous reactions.

To this end, one would readily conclude that the process of the present invention requires only calcium carbonate and water for conducting the reactions stated above, therefore, a fifth inventive feature of the invention comes with the simultaneous and spontaneous nature of both the neutralization (removal of hazards) and production (calcium nitrate + calcium sulfate production) reactions as well as with the internal nitric acid generation. Reaction rate and process yield values are considerably improved as per mentioned above.

The process disclosed by the invention can be optimized to give minimum NOₓ gas emission by means of using convenient flue gas treatment steps in the process. In a preferred embodiment of the present invention at least one, preferably two scrubbers are employed for cleaning up the out-coming off-gas, wherein the first scrubber column oxidizes NO to NO₂ and the second scrubber removes NO₂ gas of the first scrubber column. Preferably, Ca(OCl)₂ is fed to the first scrubber while Ca(OH)₂ is fed to the second scrubber.

Best mode of carrying out the invention essentially depends on the process parameters, such as temperature, pH, physical form of the calcium carbonate and ratio of the amounts of nitric acid to calcium carbonate. The reaction between calcium carbonate and nitric acid is highly exothermic. Furthermore, melange composition is quite corrosive at temperatures higher than 50 °C. Therefore, controlling the temperature of the reaction vessel becomes a crucial element of the process, thus the temperature can be adjusted to a range of 40 to 50 °C, more preferably 45 to 50 °C for optimum operation.

Desired pH of the final product is mostly around 7, and this value is directly related with the nitric acid/calcium carbonate ratio fed to reaction vessel. pH may be controlled easier in a batch process compared with a continuous process since a continuous stirred tank reactor operates in exit (effluent) conditions. For this reason, the ratio of reactants is needed to be adjusted to an optimum value for obtaining the neutral product at pH 7. On the other hand the ratio of the reactants is also important for eliminating the caking of calcium carbonate. Inventors report that ideal operation is obtained when said ratio is adjusted to 1.10 to 1.35, more preferably 1.20 to 1.30 (v/v), in other words the reaction is carried out in the presence of 10 to 35 %, more preferably 20 to 30 %, excess acid. It is also reported that amount of the excess acid determined hereby eliminates the caking of calcium carbonate and provides obtaining of the substantially neutral fertilizer composition.

In the light of the explanations and illustrations of the invention as set forth above, further advantages of the invention would be obvious for the skilled person in the art and certain modifications may be applied without leaving the scope of the appended claims. The following example is given solely for the illustration of appropriate manner of carrying out the invention.

### Example 1

CaCO₃ (80 g) and water (100 g) were added to a reactor and mixed very well. A fuel oxidant composition consisting of 13% N₂O₄, 86.40% HNO₃, and 0.6% H₂SO₄ and HF by volume was fed to the reactor at a 4 mL/min flow rate. The temperature inside the reactor, the bath temperature and the pH of the mixture were recorded during the experiment. During the acid addition period the temperature rose to maximum 55°C. The reaction was exothermic and raised the temperature of the solution. The temperature was controlled to about 50°C using the water bath due to concerns about the high corrosion rate of melange above 50°C.

The exothermic reaction led to the emission of off-gases containing NOₓ due to the reaction of the nitric acid with the neutralizing agent (CaCO₃). Two scrubbers were used in order to return the emitted NOₓ gases. By using 5% Ca(OCl)₂ (calcium hypochlorite) in the first scrubber and 5% Ca(OH)₂ (calcium hydroxide) solutions in the second scrubber this NOₓ formation is reduced to reasonable values. The fertilizer product is dried in a vacuum drier, weighed and analyzed. A fertilizer composition containing 112.5 g calcium nitrate and 16.3 g calcium sulfate was obtained.

## Claims

1. A process for producing an earth nitrate fertilizer composition from a propellant fuel oxidant composition, the process comprising the reaction of a fuel oxidant composition which comprises dinitrogen tetroxide (N₂O₄), nitric acid (HNO₃), and stabilizer agent(s) selected from the group consisting of hydrogen fluoride (HF), hydrogen iodide (HI) and sulfuric acid (H₂SO₄), with an earth carbonate and water,
wherein the neutralizations of nitric acid (HNO₃) and the stabilizer agent(s) are carried out by reacting these with the earth carbonate in an aqueous medium, and
wherein nitric acid is produced in a reaction between dinitrogen tetroxide and water for later use in the neutralization reaction between nitric acid and the earth carbonate.

2. A process according claim 1, wherein the neutralization reactions and nitric acid generation reactions are carried out in a simultaneous and spontaneous manner with the common reactants of earth carbonate and water.

3. A process according claim 1, wherein said earth nitrate is calcium nitrate and said earth carbonate is calcium carbonate.

4. A process according claim 1 and 3, wherein the calcium nitrate fertilizer composition comprises calcium nitrate (Ca(NO₃)₂) and calcium sulfate (CaSO₄).

5. A process according claim 1, wherein the reaction medium of the process is adapted to be operated in the presence of from 10 to 35%, more particularly from 20 to 30% excess acid.

6. A process according claim 1, wherein the reactions of the process are carried out at a temperature ranging from 40 to 50 °C, more preferably 45 to 50 °C.

7. A process according claim 1, wherein the fuel oxidant composition comprises preferably 10-15 % N₂O₄, 80-90 % HNO₃, and 0.3-1.2 % stabilizer agent(s) (v/v) selected from the group consisting of HF, HI and H₂SO₄.

8. A process according claim 1, wherein NOₓ gas emission of the process is treated with at least one, more preferably with two scrubbers for substantially cleaning up the NOₓ from flue gas of the process.

9. A process according claims 1 and 8, wherein a first scrubber converts NO to NO₂, while a second scrubber removes NO₂.

10. A process according claims 1, 8 or 9 wherein a Ca(OCl)₂ solution is fed to the first scrubber and a Ca(OH)₂ solution is fed to the second scrubber for removing waste gasses.
